# FASCICULE DE BREVET EUROPEEN

(11) **EP 0 844 713 B1**
(45) Date de publication et mention de la délivrance du brevet: **03.07.2002**
(21) Numéro de dépôt: 97402447.3
(22) Date de dépôt: 16.10.1997
(51) Int. Cl.: H02G 3/04

(54) **Ensemble modulaire pour support de câbles avec protection radioélectrique**
Modulares Bausatzsystem mit radioelektrischer Abschirmung zum Halten von Kabeln
Modular assembly with electrical screening for holding cables

(30) Priorité: 21.11.1996 FR 9614193
(43) Date de publication de la demande: 27.05.1998
(73) Titulaire: Etat-Francais représenté par le Délégué Général pour L'Armement, 00460 Armées (FR)
(72) Inventeur: Le Lan, Jean-Yves, 56270 Ploemeur (FR); Nadaud, Didier, 56260 Larmor Plage (FR); Strugeon, Yannick, 56530 Queven (FR)

(56) Documents cités:
- EP-A- 0 330 082
- WO-A-87/00358
- PATENT ABSTRACTS OF JAPAN vol. 017, no. 521 (E-1435), 20 septembre 1993 & JP 05 137225 A (FUAIAARANSU KOGYO KK), 1 juin 1993,
- PATENT ABSTRACTS OF JAPAN vol. 015, no. 204 (E-1071), 24 mai 1991 & JP 03 056010 A (FUJIKURA LTD), 11 mars 1991,

## Description

L'invention concerne un ensemble modulaire comportant une protection radioélectrique pour le cheminement de câbles électriques.

Il existe des dispositifs modulaires de cheminement de câbles tels ceux décrits dans les brevets cités ci-dessous, mais aucun n'est équipé de protection radioélectrique.

Le brevet FR 2 723 171 divulgue un dispositif destiné à la construction d'ensembles pour le support de corps longilignes tels des câbles, de section transversale globalement en forme de U et constitué par l'assemblage de trois pièces essentielles un fond et deux rives bordant le fond et s'élevant à l'équerre au dessus de la face supérieure du fond. Ces pièces constitutives sont réalisées à partir de matériaux en plaque, tel de la tôle ou du treillis de fils entrecroisés.

Le brevet FR 2 723 168 divulgue aussi un dispositif destiné à la construction d'ensembles pour le support de corps longilignes tels des câbles, qui comprend au moins une première pièce constituée d'une plaque ouvrée présentant plusieurs parties dont un fond et au moins une aile en équerre, et une deuxième pièce assimilée à une éclisse d'assemblage latérale pour plusieurs premières pièces, et qui présente une rive inférieure qui s'emboîte dans une rainure de la première pièce, et une rive supérieure, qui s'emboîte également dans une rainure de la première pièce.

Pour résoudre le problème de cheminement des câbles susceptibles et/ou perturbateurs, la marine utilise déjà dans des locaux techniques à bord de frégates des supports en acier galvanisé qui sont blindés électriquement; les câbles sont regroupés dans 3 ou 4 compartiments agrafés munis de couvercles;ces câbles peuvent alors être posés sur les mêmes chemins que des câbles neutres. Les câbles cheminent à l'aide de presse-étoupe;leur gaine est mise à la masse au moyen de colliers et le support au moyen d'un conducteur isolé ou non. Les couvercles sont fixés aux supports au moyen de colliers métalliques. Les distances inter-câbles sont diminuées mais l'utilisation de supports en acier ne permet pas de gain de masse

L'utilisation de gaines ferro-magnétiques souples pour le cheminement de câbles susceptibles et/ou perturbateurs est aussi connue mais elle ne permet que le passage d'un seul câble. De plus elles augmentent la signature magnétique, rendant leur application aux locaux techniques d'un navire difficile.

Enfin, la demande de brevet EP-A-330 082 divulgue un dispositif ayant la faculté de faire passer plusieurs câbles dans le support, ces câbles étant destinés à se situer à l'intérieur d'une gaine flexible rajoutée dans l'enceinte de ce support. Cette gaine est placée de la sorte pour conférer une protection radioélectrique à l'ensemble du dispositif. Cependant, cette réalisation est d'efficacité moindre et de fabrication coûteuse due à l'ajout en plus du support, de moyens annexes de protection radioélectrique. De plus, le dispositif en question n'est pas modulaire et ne permet pas d'adapter le support à différentes configurations, comme à la réalisation de plusieurs compartiments isolés en utilisant des éléments communs du support. L'invention a donc pour but de proposer un ensemble modulaire pour le cheminement et le support de câbles, qui ne présente pas les inconvénients des techniques antérieures;il assure une protection radioélectrique efficace, tout en permettant un regroupement des câbles et un gain de masse de l'ensemble, et qui est donc particulièrement adapté aux applications navales.

L'invention a donc pour objet un ensemble modulaire avec protection radioélectrique pour le cheminement de câbles, comprenant les éléments assemblés suivants :
- au moins deux flancs de profil en forme de U positionnés à des distances sensiblement égales et formant entre deux flancs directement consécutifs un compartiment,
- un fond et un couvercle,
- des moyens de support des câbles,
caractérisé en ce que les flancs, le fond ainsi que le couvercle sont réalisés en matériau composite et chacun muni de moyens du type grillage, qui, à l'aide d'une part de moyens pour assurer la continuité radioélectrique entre le fond et le couvercle] et d'autre part de moyens pour assurer la continuité radioélectrique des ensembles modulaires entre eux et avec la masse électrique d'un local, permettent aux compartiments de former des espaces du type cage de Faraday.

L'ensemble modulaire selon l'invention permet le rapprochement des câbles sensibles et/ou perturbateurs entre eux et par rapport à des câbles neutres.
Il évite le croisement de câbles et favorise la diminution des longueurs de câbles, du fait d'un cheminement rectiligne.
Un autre avantage de l'invention est de permettre un gain de masse des chemins de câbles du fait de l'utilisation de matériaux composites et de la diminution des longueurs de câbles.
L'ensemble modulaire selon l'invention est particulièrement adapté à la construction navale et permet une diminution de la masse magnétique d'un navire.

De préférence, les flancs sont assemblés mécaniquement avec le fond et le couvercle.

Préférentiellement, le grillage est une toile de laiton et son poids moyen de l'ordre de 1 kg/m².

Le grillage est avantageusement percé d'orifices et étamé autour de ces orifices pour le passage d'éléments de fixation.

Dans un mode de réalisation préféré les moyens qui assurent la continuité radioélectrique entre fond et couvercle sont des joints haute fréquence.
Ils peuvent être en cuivre/nickel et peuvent être fixés au grillage par des rivets en laiton.

De préférence, le grillage est fixé aux flancs par l'intermédiaire d'inserts en laiton.

Les moyens de support des câbles peuvent être des barreaux amagnétiques fixés sur le fond de l'ensemble.

Les moyens assurant la continuité radioélectrique des ensembles modulaires entre eux et avec la masse électrique d'un local peuvent être des pattes de masse.

Dans une variante de réalisation le matériau composite utilisé est à base de tissu de verre de structure serrée et de résine polyester résistante au feu, pour la protection incendie des nappes de câbles.
L'ensemble modulaire selon l'invention augmente ainsii la sécurité du chemin de câbles dans des locaux soumis à un incendie.

La protection peut être complétée par l'enduction par de la résine phénolique de tous les éléments de l'assemblage hormis les joints haute fréquence

D'autres avantages de la présente invention apparaitront à la lecture de la description suivante d'un mode de réalisation préférentiel, donné à titre illustratif et non limitatif, et des figures annexées parmi lesquelles :
- la figure 1 représente en coupe un ensemble modulaire selon l'invention;
- la figure 2 représente en coupe un compartiment de l'ensemble modulaire selon l'invention.

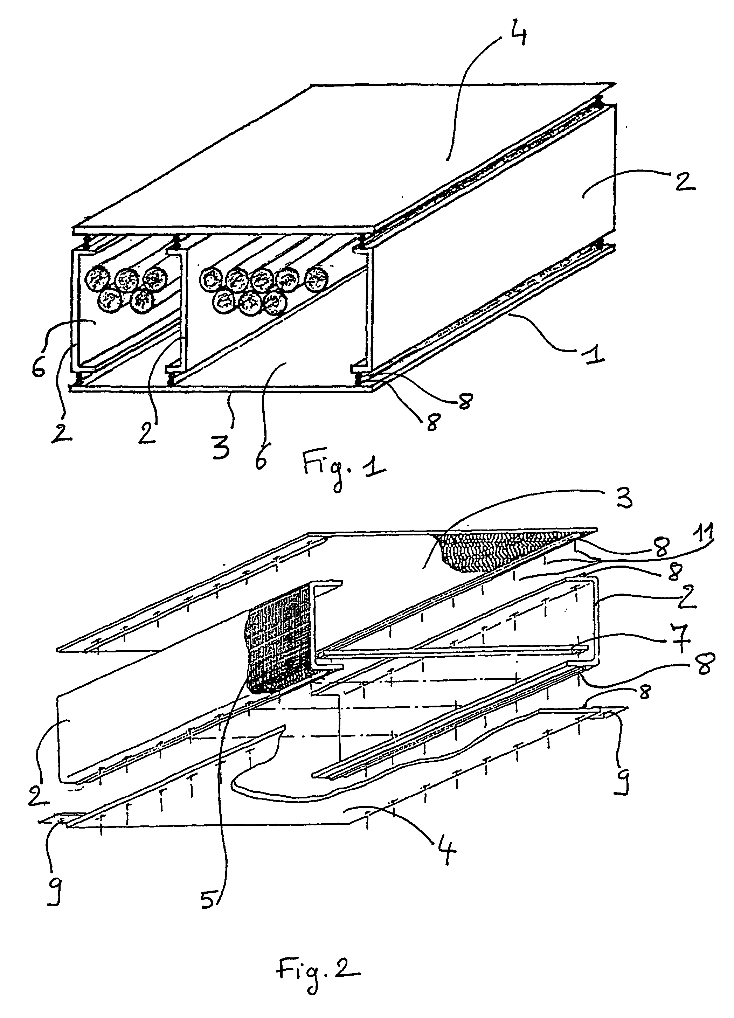

Sur la figure 1, l'ensemble modulaire 1 de cheminement de câbles selon l'invention est représenté dans une configuration où il est positionné sur un plafond. Il est composé principalement de deux flancs 2 de profil en forme de U, d'un fond 4 et d'un couvercle 3.

Dans une autre configuration où l'ensemble modulaire serait positionné sur un plancher, qui est celle représentée sur la figure 2, le couvercle 3 se situerait au dessus des flancs et le fond 4 au dessous de ceux-ci.

Les flancs 2, le fond 4 et le couvercle 3 sont fixés mécaniquement entre eux. Les deux flancs 2 forment un compartiment 6, pouvant recevoir plusieurs câbles susceptibles ou perturbateurs. Un deuxième compartiment peut être obtenu en adjoignant un troisième flanc 2 comme indiqué sur la figure 1. D'autres compartiments peuvent aussi être créés par l'adjonction de la même manière de flancs 2. Les dimensions du fond 3 et du couvercle 4 sont fonction du nombre de compartiments souhaités.

Les flancs 2, le fond 3 et le couvercle 4 sont en matériau composite et sont fabriqués à partir de profilés préfabriqués.

Le fond et le couvercle sont des panneaux composites blindés électromagnétiquement selon le procédé décrit dans la demande de brevet française n°95 08166, et au cours duquel on pose avant polymérisation sur la dernière couche de l'empilement du matériau composite un grillage pouvant être une toile de laiton présentant un vide de maille de l'ordre de 0,35 mm. Les faces du fond et du couvercle, qui sont équipées du grillage sont en regard dans l'ensemble modulaire.

La fabrication des flancs se fait à partir d'un moule en forme de U dans lequel on réalise, après dépôt d'une couche d'accrochage ou mat, un empilement de couches de tissus de verre imprégnées de résine polyester jusqu'à obtention de l'épaisseur souhaitée. De préférence, le tissu de verre est de type satin d'un grammage d'environ 630 g/m² et la résine du type polyester isophtalique greffée. Ce type de résine associé à la structure très serrée du tissu de verre confert une certaine résistance au feu à l'ensemble modulaire.

Les flancs sont assemblés mécaniquement d'une part avec le fond d'autre part avec le couvercle par l'intermédiaire de barrettes amagnétiques non représentées positionnées dans une rainure pratiquée suivant la longueur de chaque flanc;les barrettes sont munies suivant leur longueur en certains points référencés 11 sur la figure 2, de tiges filetées qui sont vissées au travers de trous pratiqués suivant la longueur des rainures et la longueur des panneaux constituant le fond et le couvercle.

L'étanchéité radioélectrique est assurée par la pose sur la surface extérieure de chaque flanc en forme de U d'un grillage 5 pouvant être une toile en laiton, qui épouse parfaitement la forme du flanc. Le grillage a un rôle de cage de Faraday. De préférence, son vide de maille est de l'ordre de 0,35 mm et le poids moyen du grillage de l'ordre de 1 kg/m².

Le grillage aura été préalablement percé en certains points d'orifices et étamé en ces points pour permettre le passage des éléments de fixation des barrettes. Les barrettes sont au contact de joints haute fréquence 8, qui assurent la continuité électrique des flancs d'une part avec le fond et d'autre part avec le couvercle;ils sont de préférence en cuivre/nickel et sont fixés sur le grillage par des rivets en laiton;les barrettes et les joints haute fréquence se trouvent positionnés au centre de la surface extérieure des deux bras de la forme en U des flancs.

L'ensemble du grillage muni des joints est fixé aux flancs par l'intermédiaire d'inserts en laiton.

L'ensemble constitué par l'assemblage des pièces en matériau composite, du grillage équipé de joints haute fréquence et devenu solidaire de la structure composite est recouvert de résine phénolique, hormis les joints. Des précautions particulières doivent être prises afin qu'aucune résine n'altère les joints.

Des barreaux amagnétiques 7 sont fixés sur le fond du compartiment pour le support des câbles.

La continuité électrique entre ensembles modulaires est assurée par des pattes de masse 9 en cuivre étamé. Ces mêmes pattes permettent leur mise à la masse électrique d'un local, à bord d'un navire ou dans une habitation.

Quelque soit la configuration de positionnement de l'ensemble modulaire, au plafond ou au plancher, les pattes de masse 9 sont toujours situées au niveau du fond 4 afin d'assurer une continuité radioélectrique rigide accessible et la plus courte possible.

Du fait de l'existence de compartiments, il est possible d'avoir un chemin de câble par catégorie de câble : susceptible, perturbateur, susceptible et perturbateur.

L'ensemble modulaire selon l'invention peut être utilisé à bord des navires mais aussi dans le domaine du génie civil pour l'équipement de salles informatiques, de laboratoires ou de tours de contrôle dans les aéroports.

## Revendications

1. Ensemble modulaire avec protection radioélectrique pour le cheminement de câbles, comprenant les éléments assemblés suivants :
- au moins deux flancs (2) de profil en forme de U positionnés à des distances sensiblement égales et formant entre deux flancs (2) directement consécutifs un compartiment (6),
- un fond (4) et un couvercle (3),
- des moyens de support des câbles (7),
**caractérisé en ce que** les flancs (2), le fond (4) ainsi que le couvercle (3) sont réalisés en matériau composite et chacun muni de moyens du type grillage (5), qui, à l'aide d'une part de moyens (8) pour assurer la continuité radioélectrique entre le fond (4) et le couvercle (3) et d'autre part de moyens pour assurer la continuité radioélectrique des ensembles modulaires entre eux et avec la masse électrique d'un local (9), permettent aux compartiments (6) de former des espaces du type cage de Faraday.

2. Ensemble modulaire avec protection radioélectrique pour le cheminement de câbles selon le revendication 1, **caractérisé en ce que** les flancs (2) sont assemblés mécaniquement avec le fond (4) et le couvercle (3).

3. Ensemble modulaire avec protection radioélectrique pour le cheminement de câbles selon l'une des revendications 1 ou 2, **caractérisé en ce que** le grillage (5) est une toile de laiton.

4. Ensemble modulaire avec protection radioélectrique pour le cheminement de câbles selon l'une des revendications 1 à 3, **caractérisé en ce que** le poids moyen du grillage (5) est de l'ordre de 1 kg/m².

5. Ensemble modulaire avec protection radioélectrique pour le cheminement de câbles selon l'une des revendications 1 à 4, **caractérisé en ce que** le grillage (5) est percé d'orifices et étamé autour de ces orifices pour le passage d'éléments de fixation des flancs avec le couvercle et le fond.

6. Ensemble modulaire avec protection radioélectrique pour le cheminement de câbles selon l'une des revendications 1 à 5, **caractérisé en ce que**
les moyens qui assurent la continuité radioélectrique entre fond et couvercle sont des joints haute fréquence (8).

7. Ensemble modulaire avec protection radioélectrique pour le cheminement de câbles selon la revendication 6, **caractérisé en ce que** les joints haute fréquence (8) sont en cuivre/nickel.

8. Ensemble modulaire avec protection radioélectrique pour le cheminement de câbles selon l'une des revendications 6 ou 7, **caractérisé en ce que** les joints haute fréquence (8) sont fixés au grillage par des rivets en laiton.

9. Ensemble modulaire avec protection radioélectrique pour le cheminement de câbles selon l'une des revendications 1 à 8, **caractérisé en ce que** le grillage (5) est fixé aux flancs par l'intermédiaire d'inserts en laiton.

10. Ensemble modulaire avec protection radioélectrique pour le cheminement de câbles selon l'une des revendications 1 à 9, **caractérisé en ce que** les moyens de support des câbles sont des barreaux amagnétiques (7) fixés sur le fond.

11. Ensemble modulaire avec protection radioélectrique pour le cheminement de câbles selon l'une des revendications 1 à 10, **caractérisé en ce que** les moyens assurant la continuité radioélectrique des ensembles modulaires entre eux et avec la masse électrique d'un local sont des pattes de masse (9).

12. Ensemble modulaire avec protection radioélectrique pour le cheminement de câbles selon l'une des revendications 1 à 11, **caractérisé en ce que** le matériau composite utilisé est à base de tissu de verre de structure serrée et de résine polyester résistante au feu.

13. Ensemble modulaire avec protection radioélectrique pour le cheminement de câbles selon l'une des revendications 1 à 12, **caractérisé en ce que** l'ensemble modulaire est recouvert par une résine phénolique, à l'exception des joints.

## Patentansprüche

1. Modulare Baugruppe mit radioelektrischer Abschirmung zum Führen von Kabeln, mit den folgenden, zusammengefügten Elementen:
- wenigstens zwei Flanschen (2) mit U-förmigem Profil, die in im wesentlichen gleichen Abständen angeordnet sind und zwischen zwei unmittelbar aufeinander folgenden Flanschen (2) ein Abteil (6) bilden,
- einem Boden (4) und einem Deckel (3),
- Mitteln (7) zum Halten der Kabel,
**dadurch gekennzeichnet, daß** die Flansche (2), der Boden (4) sowie der Deckel (3) aus einem Kompositmaterial bestehen und jeweils mit Gittermitteln (5) versehen sind, die mit Hilfe zum einen von Mitteln (8) zum Gewährleisten der radioelektrischen Kontinuität zwischen dem Boden (4) und dem Deckel (3) und zum anderen Mitteln zum Gewährleisten der radioelektrischen Kontinuität der modularen Baugruppen zwischen einander und mit der elektrischen Masse (9) eines Gebäudes es den Abteilen (6) ermöglichen, Räume vom Typ des Faradayschen Käfigs zu bilden.

2. Modulare Baugruppe mit radioelektrischer Abschirmung zum Führen von Kabeln nach Anspruch 1, **dadurch gekennzeichnet, daß** die Flansche (2) mechanisch mit dem Boden (4) und dem Deckel (3) verbunden sind.

3. Modulare Baugruppe mit radioelektrischer Abschirmung zum Führen von Kabeln nach einem der Ansprüche 1 und 2, **dadurch gekennzeichnet, daß** das Gitter (5) ein Messingblech ist.

4. Modulare Baugruppe mit radioelektrischer Abschirmung zum Führen von Kabeln nach einem der Ansprüche 1 bis 3, **dadurch gekennzeichnet, daß** das mittlere Gewicht des Gittermittels (5) in der Größenordnung von 1 kg je m² liegt.

5. Modulare Baugruppe mit radioelektrischer Abschirmung zum Führen von Kabeln nach einem der Ansprüche 1 bis 4, **dadurch gekennzeichnet, daß** das Gitter (5) mit Öffnungen versehen ist und um die Öffnungen herum, für den Durchgang von Elementen zur Befestigung der Flansche mit dem Deckel und dem Boden, verzinnt ist.

6. Modulare Baugruppe mit radioelektrischer Abschirmung zum Führen von Kabeln nach einem der Ansprüche 1 bis 5, **dadurch gekennzeichnet, daß** die Mittel, welche die radioelektrische Kontinuität zwischen dem Boden und dem Deckel gewährleisten, Hochfrequenz-Dichtungen (8) sind.

7. Modulare Baugruppe mit radioelektrischer Abschirmung zum Führen von Kabeln nach Anspruch 6, **dadurch gekennzeichnet, daß** die Hochfrequenz-Dichtungen (8) aus Kupfer/Nickel bestehen.

8. Modulare Baugruppe mit radioelektrischer Abschirmung zum Führen von Kabeln nach einem der Ansprüche 6 und 7, **dadurch gekennzeichnet, daß** die Hochfrequenz-Dichtungen (8) am Gitter durch Messing-Niete befestigt sind.

9. Modulare Baugruppe mit radioelektrischer Abschirmung zum Führen von Kabeln nach einem der Ansprüche 1 bis 8, **dadurch gekennzeichnet, daß** das Gitter (5) an den Flanschen durch Messing-Einsätze befestigt ist.

10. Modulare Baugruppe mit radioelektrischer Abschirmung zum Führen von Kabeln nach einem der Ansprüche 1 bis 9, **dadurch gekennzeichnet, daß** die Kabelhaltemittel unmagnetische Stangen (7) sind, die an dem Boden befestigt sind.

11. Modulare Baugruppe mit radioelektrischer Abschirmung zum Führen von Kabeln nach einem der Ansprüche 1 bis 10, **dadurch gekennzeichnet, daß** die Mittel, welche die radioelektrische Kontinuität der modularen Baugruppen untereinander und mit der elektrischen Masse eines Gebäudes gewährleisten, Masselaschen (9) sind.

12. Modulare Baugruppe mit radioelektrischer Abschirmung zum Führen von Kabeln nach einem der Ansprüche 1 bis 11, **dadurch gekennzeichnet, daß** das verwendete Kompositmaterial auf einem Glasfasergewebe mit dichter Struktur und einem gegen Feuer widerstandsfähigen Polyesterharz basiert.

13. Modulare Baugruppe mit radioelektrischer Abschirmung zum Führen von Kabeln nach einem der Ansprüche 1 bis 12, **dadurch gekennzeichnet, daß** die modulare Baugruppe, abgesehen von den Dichtungen, mit einem Phenolharz bedeckt ist.

## Claims

1. Modular assembly with radioelectrical protection for the routing of cables, comprising the following assembled elements :
- at least two sides (2) of U-shaped profile positioned at substantially equal distances and forming a compartment (6) between two directly following sides (2),
- a bottom (4) and a top (3),
- cable support means (7),
**characterised in that** the sides (2), the bottom (4) and the top (3) are made of composite material and are each provided with means of the mesh type (5), which, with the aid, on the one hand, of means (8) for ensuring the radioelectrical continuity between the bottom (4) and the top (3) and, on the other hand, of means (9) for ensuring the radioelectrical continuity of the modular assemblies among one another and with the electrical earth of a room, enables the compartments (6) to form spaces of the Faraday cage type.

2. Modular assembly with radioelectrical protection for the routing of cables according to Claim 1,
**characterised in that** the sides (2) are mechanically joined to the bottom (4) and the top (3).

3. Modular assembly with radioelectrical protection for the routing of cables according to either of Claims 1 and 2, **characterised in that** the mesh (5) is a brass cloth.

4. Modular assembly with radioelectrical protection for the routing of cables according to one of Claims 1 to 3, **characterised in that** the average weight of the mesh (5) is of the order of 1 kg/m².

5. Modular assembly with radioelectrical protection for the routing of cables according to one of Claims 1 to 4, **characterised in that** the mesh (5) has orifices made in it and is tin-coated around these orifices for the passage of elements for fixing the sides to the top and the bottom.

6. Modular assembly with radioelectrical protection for the routing of cables according to one of Claims 1 to 5, **characterised in that** the means which ensure the radioelectrical continuity between bottom and top are radiofrequency gaskets (8).

7. Modular assembly with radioelectrical protection for the routing of cables according to Claim 6,
**characterised in that** the radiofrequency gaskets (8) are made of cupronickel.

8. Modular assembly with radioelectrical protection for the routing of cables according to either of Claims 6 and 7, **characterised in that** the radiofrequency gaskets (8) are fixed to the mesh by brass rivets.

9. Modular assembly with radioelectrical protection for the routing of cables according to one of Claims 1 to 8, **characterised in that** the mesh (5) is fixed to the sides by means of brass inserts.

10. Modular assembly with radioelectrical protection for the routing of cables according to one of Claims 1 to 9, **characterised in that** the cable support means are non-magnetic bars (7) fixed to the bottom.

11. Modular assembly with radioelectrical protection for the routing of cables according to one of Claims 1 to 10, **characterised in that** the means ensuring the electrical continuity of the modular assemblies among one another and with the electrical earth of a room are earth tabs (9).

12. Modular assembly with radioelectrical protection for the routing of cables according to one of Claims 1 to 11, **characterised in that** the composite material used is based on glass fabric with a closely woven structure and on fire-resistant polyester resin.

13. Modular assembly with radioelectrical protection for the routing of cables according to one of Claims 1 to 12, **characterised in that** the modular assembly, with the exception of the gaskets, is covered by a phenolic resin.
